# EUROPEAN PATENT SPECIFICATION

(11) **EP 2 736 189 B1**
(45) Date of publication and mention of the grant of the patent: **21.08.2019**
(21) Application number: 12786448.6
(22) Date of filing: 21.03.2012
(51) Int. Cl.: H04L 1/16

(54) **STATUS REPORT PROCESSING METHOD, COMMUNICATION DEVICE, AND COMMUNICATION SYSTEM**
VERFAHREN ZUR VERARBEITUNG VON STATUSBERICHTEN, KOMMUNIKATIONSVORRICHTUNG UND KOMMUNIKATIONSSYSTEM
PROCÉDÉ DE TRAITEMENT DE RAPPORT D'ÉTAT, DISPOSITIF DE COMMUNICATION ET SYSTÈME DE COMMUNICATION

(30) Priority: 19.07.2011 CN 201110202401
(43) Date of publication of application: 28.05.2014
(73) Proprietor: ZTE Corporation, Shenzhen, Guangdong 518057 (CN)
(72) Inventor: WEI, Gangqiang, Shenzhen Guangdong 518057 (CN)
(74) Representative: Ahner, Philippe
(86) International application number: PCT/CN2012/072756
(87) International publication number: WO 2012/155662

(56) References cited:
- WO-A1-2008/065253
- WO-A1-2008/147271
- CN-A- 101 227 483
- CN-A- 101 843 026
- CN-A- 101 978 666
- CN-A- 102 325 015
- US-A1- 2008 225 824
- 'Evolved Universal Terrestrial Radio Access (E-UTRA), RADIO LINK CONTROL (RLC) PROTOCOL SPECIFICATION' 3GPP TS 36.322 VERSION 8.8.0 RELEASE 8 31 July 2010, XP050441886

## Description

### TECHNICAL FIELD

The present disclosure relates to the technical field of wireless communications, and in particular to a method for processing a status report, a communication device and a communication system.

### BACKGROUND

A protocol stack of an E-URTAN NodeB (eNB) and a User Equipment (UE) include, from top to low: a Message Data Convergence Protocol (PDCP) layer, a Radio Link Control (RLC) layer, a Medium Access Control (MAC) layer and a Physical (PHY) layer. When it is necessary for a sending terminal (eNB or UE) to transmit data to a receiving terminal (UE or eNB), the data to be transmitted to the receiving terminal (UE or eNB) is sequentially processed by the PDCP layer, the RLC layer and the MAC layer of a sending terminal (eNB or UE), then sequentially sent to the PHY layer of the receiving terminal through the physical channel of the PHY layer of the sending terminal, sequentially processed by the MAC layer, the RLC layer and the PDCP layer of the receiving terminal and finally delivered to the top layer of the receiving terminal.

The RLC layer is supportive of the following three transmission modes: an Acknowledged Mode (AM), a Un-Acknowledged Mode (UM) and a Transparent Mode (TM), among which the AM is the most widely applied. In the mechanism of the AM mode, an RLC sending terminal requests an RLC receiving terminal to reply a status report by sending a status report reply request (POLL PDU) message. After the RLC receiving terminal receives the POLL PDU message, the RLC receiving terminal replies a status report if a status report reply condition is met.

At present, as the MAC layer adopts a Hybrid Automatic Repeat Request (HARQ) mechanism, an RLC sending terminal may receive a repeatedly-received status report or an expired status report.

The reception of a repeatedly-received status report may lead to the following problems: for example, assuming that an RLC sending terminal receives the same status report twice and that the status report contains five Negative Acknowledgement (NACK) messages; when the RLC sending terminal receives the status report for the first time, the RLC sending terminal constructs five PDU retransmission messages aiming at the five NACK messages and sends the five PDU retransmission messages to the RLC receiving terminal; when the RLC sending terminal receives the status report for the second time, the RLC sending terminal again constructs five retransmission PDU messages and sends the five retransmission PDU messages to the RLC receiving terminal, which causes a waste of air interface resources, increases the probability of the exceeding of the maximum retransmission times allowed in an AM mode and complicates the processing flow of the RLC receiving terminal.

The reception of an expired status report may lead to the following problems: for example, if an RLC receiving terminal successively sends two status reports, while the one of the status reports which is sent later reaches the RLC sending terminal earlier, assuming that the status report which is sent later contains 10 NACK messages, then then RLC sending terminal constructs 10 retransmission messages according to the 10 NACK messages contained in the status report which is sent later and sends the 10 retransmission messages to the RLC receiving terminal. Then, the RLC sending terminal receives the one of the status reports which is sent earlier and which is actually an expired status report, assuming that the status report which is sent earlier contains five NACK messages, in this case, if retransmission PDU messages are constructed again according to the status report and then sent to the RLC receiving terminal, then limited air interface resources will be wasted and the retransmission times of messages will be increased.

Currently, for a status report that is repeatedly received or has been expired, there is not a corresponding processing mechanism in RLC protocols for handling those scenarios.

WO 2008/147271 A1 discloses that in a method and a system Radio Link Control (RLC) Status Report in a cellular radio system employing Acknowledge Mode (AM) RLC are not delivered in sequence, thereby obtaining an increased peak throughput. Thus, even when an in-sequence delivery exists, for example if the system uses HARQ transmission, it is not used for data related to the RLC status report.

### SUMMARY

In view of the above, the present disclosure provides a status report processing method, a communication device and a communication system, which are capable of determining whether or not a received status report is a repeatedly-received status report or an expired status report and are therefore capable of reducing unnecessary processing flows and saving air interface resources.

The features of the method, device and system according to the present invention are defined in the independent claims, and the preferable features according to the present invention are defined in the dependent claims.

The present disclosure has the following benefit effects:
As timing information is added in a status report, an RLC sending terminal is capable of determining whether or not the status report is a repeatedly-received status report or an expired status report according to the timing information contained in the status report, thus reducing unnecessary processing flows and saving air interface resources.

By recording the timing information of a status report in existing CPT Field or CPT Field and D/C Field of the status report, the present disclosure is applicable to existing communication protocols without making any modification on a status report, thus saving replacement cost.

### BRIEF DESCRIPTION OF THE DRAWINGS

Fig. 1 is a schematic diagram illustrating the flow of a status report processing method disclosed in the present disclosure.
Fig. 2 is a schematic diagram illustrating the flow of a status report generation method disclosed in the present disclosure.
Fig. 3 is a schematic diagram illustrating the structure of a communication device disclosed in the present disclosure.
Fig. 4 is a schematic diagram illustrating another structure of a communication device disclosed in the present disclosure.
Fig. 5 is a schematic diagram illustrating the structure of a communication system disclosed in the present disclosure.

### DETAILED DESCRIPTION

Specific embodiments of the present disclosure are described below in detail with reference to accompanying drawings.

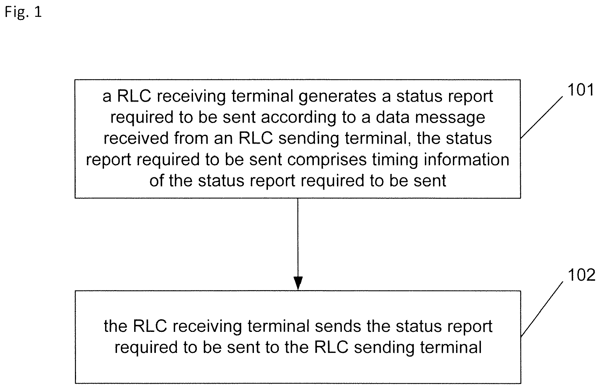

Fig. 1 is a schematic diagram illustrating the flow of a status report processing method disclosed in the present disclosure, as shown in Fig. 1, the method for processing a status report, which is applied to an RLC receiving terminal that may be an eNB or a UE, includes the following steps:
Step S101: the RLC receiving terminal generates a status report required to be sent according to a data message received from an RLC sending terminal, wherein the status report required to be sent comprises timing information of the status report required to be sent. The time sequence time may represents a time at which the status report required to be sent is generated or a serial number for the status report required to be sent.
Step S102: the RLC receiving terminal sends the status report required to be sent to the RLC sending terminal. After the RLC sending terminal receives the status report, the RLC sending terminal determines whether or not the status report is a repeatedly-received status report or an expired status report according to the timing information comprised in the status report. The RLC sending terminal may be an UE or an eNB.

When the timing information is the serial number of the sent status report, the step of generating the status report required to be sent according to step S102 may specifically include:
Step 1: acquiring a serial number for a previously sent status report;
Step 2: calculating the serial number for the status report required to be sent according to the serial number for the previously sent status report; and
Step 3: generating the status report required to be sent according to the serial number for the status report required to be sent.

Compared with a status report according to the prior art, the status report described in the present disclosure comprises timing information, which enables an RLC sending terminal to determine whether or not a status report is a repeatedly-received status report or an expired status report according to the timing information included in the status report, and thereby unnecessary processing flows can be reduced and air interface resources can be saved.

In the present disclosure, timing information may be added in a status report in many ways, for example, an existing status report may be extended by one field to record the timing information of the status report, or the timing information of the status report may be recorded in a certain field of the existing status report.

In the present disclosure, when the timing information is the serial number of the status report, the serial number of the status report may be recorded in the CPT Field of the status report. The CPT Field in the status report is described in the following table:

| Value | Description |
|---|---|
| 000 | STATUS PDU (indicate a type of a control message) |
| 001-111 | Reserved value (Reserved) |

The CPT Field includes three bits which, when the CPT Field is 000, it indicates a type of a control message, or represents a reserved value when being other values.

At present, there is only one type of control message in the RLC layer, which is already distinguished by the D/C field of the status report. Therefore, the CPT Field of the status report is actually useless and is therefore used in the present disclosure to record the serial number of the status report.

When the RLC receiving terminal sends the first status report, the RLC receiving terminal may set the serial number of the first status report to be 0 (i.e. the value of the CPT Field is 000). When the RLC receiving terminal sends the second status report, the serial number of the second status report may be set to 1 (i.e. the value of the CPT Field is 001), and so on and so forth. When the RLC receiving terminal sends the eighth status report, the serial number of the eighth status report may be set to 7 (i.e. the value of the CPT Field is 111). When the RLC receiving terminal sends the ninth status report, the serial number of the ninth status report may be again set to 0, i.e. the serial number of the status report is periodical.

Three bits in the CPT Field will not fulfill all applications, since the three bits in the CPT Field can only represent 8 effective numerals (000-111). In the present disclosure, the CPT Field and the D/C field of the status report may be used together to record the serial number of the status report. The D/C Field of the status report is 1 bit, and the simultaneous use of the CPT Field and the D/C Field can represent 16 effective numerals (0000-1111). In addition, to distinguish a data message from a control message, one of the 16 effective numbers may be used to represent the type of a message (a data message or a control message), while the other 15 effective numbers are used to record the serial number of the status report.

When an RLC receiving terminal sends the first status report, the RLC receiving terminal may set the serial number of the first status report to be 0 (i.e. the value of the CPT field is 0000), when the RLC receiving terminal sends the second status report, the RLC receiving terminal may set the serial number of the second status report to be 1 (i.e. the value of the CPT field is 0001), and so on and so forth.

In the aforementioned embodiment, by recording timing information of a status report in existing CPT field or CPT field and D/C field of the status report, the status report processing method is applicable to existing communication protocols without making any modification on a status report, thus saving replacement cost.

In the aforementioned embodiment, it is described the status report processing flow at an RLC receiving terminal, and below is detailed description of a status report processing flow at an RLC sending terminal.

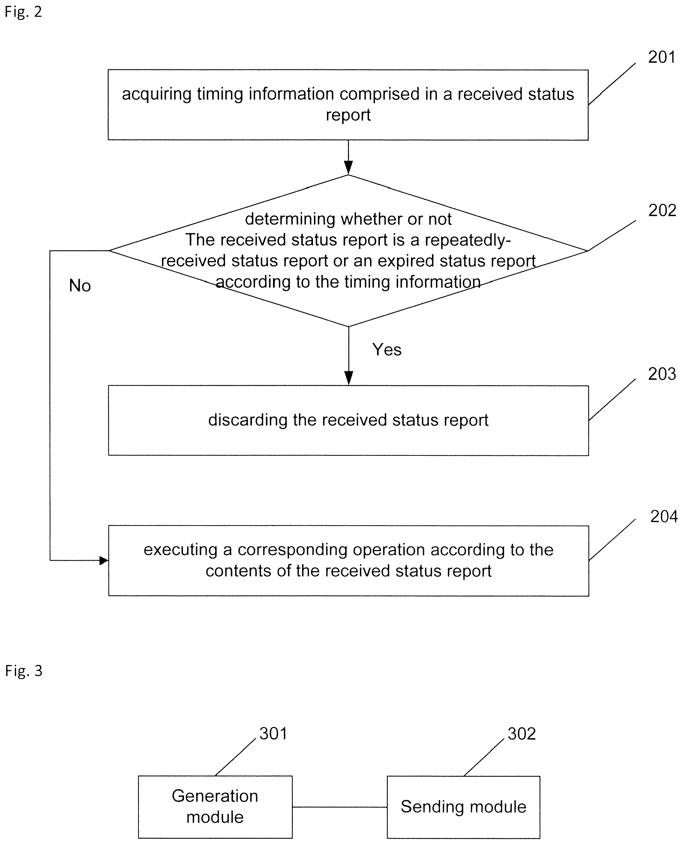

Fig. 2 is a schematic diagram illustrating another flow of a status report processing method disclosed in the present disclosure, as shown in Fig. 2, the status report processing method, which is applied to an RLC sending terminal, includes the following steps:
Step S201: acquiring, by a RLC sending terminal, timing information comprised in a received status report, wherein the timing information represents a time at which the received status report is generated or a serial number for the received status report.
Step S202: determining, by the RLC sending terminal, whether or not the received status report is a repeatedly-received status report or an expired status report according to the timing information, if so, go to step S203, otherwise, go to step S204.
Step S203: discarding the received status report.
Step S204: executing a corresponding operation according to the contents of the received status report. Specifically, if NACK information is contained in the received status report, the RLC sending terminal needs to construct a PDU retransmission message aiming at the NACK information and sends the PDU retransmission message to the RLC receiving terminal. If no NACK information is contained in the received status report, the RLC sending terminal will continue to transmit other PDU messages.

It is mentioned in the aforementioned embodiment that timing information may be added in a status report in many ways: for example, an existing status report may be extended by one field to record the timing information of the status report, or the timing information of the status report may be recorded in a certain field of the existing status report, for example, the CPT field, or the CPT field and the D/C field.

When the serial number of the status report is recorded in the CPT field of the status report, or recorded in the CPT field and the D/C field of the status report, Step S301 (acquiring the timing information comprised in the received status report) is specifically as follows: acquiring the serial number carried in the CPT field of the received status report, or acquiring the serial number carried in the CPT field and the D/C field of the received status report.

In the present disclosure, whether or not the received status report is a repeatedly-received status report may be determined using the following method: store the serial number of the previously received status report, compare the serial number of the received status report with that of the previously received status report, and determine the received status report to be a repeatedly-received status report if the serial number of the received status report is the same as that of the previously received status report.

In the present disclosure, whether or not the received status report is an expired status report may be determined using the following method: determine a variable range for the serial number of the status report currently required to be received according to the serial number of the previously received status report and a proper receiving window, determine whether or not the serial number of the currently received status report is within the variable range of the serial number of the status report currently required to be received, and determine the currently received status report is an expired status report if the serial number of the currently received status report is beyond the variable range of the serial number of the status report currently required to be received.

That is, step S202 (determining, by the RLC sending terminal, whether or not the received status report is a repeatedly-received status report or an expired status report according to the timing information) specifically includes:
Step 1: determining whether or not the serial number of the received status report meets the following conditions:
   the serial number for the received status report is the same as the serial number for a previously received status report; or
   the serial number for the received status report is beyond a variable range of the serial number of the status report currently required to be received
Step 2: when the serial number of the received status report meets the above conditions, it is determined that the received status report is a repeatedly-received status report or an expired status report.
Step 3: when the serial number of the received status report fails to meet the above conditions, updating the variable range of the serial number of the status report currently required to be received according to the serial number of the received status report, and recording the serial number for the received status report as the serial number for the previously received status report.

The aforementioned status report processing method is illustrated below based on an example of the record of the serial number of the status report in the CPT field of the status report.

For an RLC receiving terminal, a variable status (S) may be set to record the serial number of the previously sent status report, wherein an initial value of the variable status (S) is 0.

The RLC receiving terminal sends a first status report having a serial number of 0, at this time, the value of the status (S) is still 0, unchanged. The RLC receiving terminal sends a second status report, executes the following operation: status(S)=(status(S)+1)%8, and fills the resulting status(S), which is 1 at this time, into the CPT field of the status report currently required to be sent, and updates the value of the currently recorded status(S) to be 1. Similarly, the aforementioned operation, that is, status(S)=(status(S)+1)%8, is carried out every time it is required to send a status report, the resulting status(S) is filled into the CPT field of the status report currently required to be sent, and the value of the currently recorded status(S) is updated.

For an RLC sending terminal, a variable status(R) may be set to record the serial number of the previously received status report and a receiving window the size of which is 4 is set, and the variable range of the status report currently required to be received is (status(R),(status(R)+4)%8).

After the RLC sending terminal receives a status report from the RLC receiving terminal, the RLC sending terminal acquires the value of the CPT field in the currently received status report and compares the acquired value with the status (R) (the serial number of the previously received status report):
Case 1: if the value of the CPT field in the currently received status report is equal to the status (R), the RLC sending terminal determines that the currently received status report is a repeatedly-received status report and then discards the currently received status report.
Case 2: if the value X of the CPT field in the currently received status report is within the variable range (status(R),(status(R)+4)%8), the RLC sending terminal updates the value of the status(R) to be the value X of the CPT field and then carries out a corresponding processing according to the contents of the status report.
Case 3: if the value of the CPT field in the currently received status report is beyond the variable range (status(R),(status(R)+4)%8), the RLC sending terminal determines that the currently received status report is a repeatedly-received status report and then discards the currently received status report.

As shown in Fig. 3, a communication device provided in the present disclosure as an RLC receiving terminal comprises: a generation module 301 configured to generate a status report required to be sent according to a data message received from an RLC sending terminal, the status report required to be sent comprises timing information of the status report required to be sent; and a sending module 302 configured to send the status report required to be sent to the RLC sending terminal which, after receiving the status report, determines whether or not the status report is a repeatedly-received status report or an expired status report according to the timing information comprised in the status report.

The timing information represents a time at which the status report required to be sent is generated, or represents a serial number for the status report required to be sent.

When the timing information represents a serial number for the status report required to be sent, the generation module 301 may comprise: an acquisition module configured to acquire a serial number for a previously sent status report; a calculation module configured to calculate the serial number for the status report required to be sent according to the serial number for the previously sent status report; and an implementation module configured to generate the status report required to be sent according to the serial number for the status report required to be sent.

In the present disclosure, timing information may be added in a status report in many ways: for example, an existing status report may be extended by one field to record the timing information of the status report, or the timing information of the status report may be recorded in a certain existing field, for example, the CPT field, or the CPT field and the D/C field, of the status report.

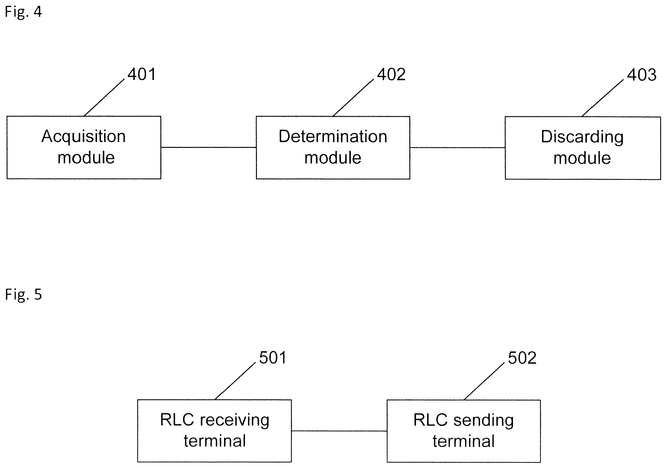

As shown in Fig. 4, another communication device provided in the present disclosure as an RLC sending terminal comprises: an acquisition module 401 configured to acquire timing information comprised in a received status report; a determination module 402 configured to determine whether or not the received status report is a repeatedly-received status report or an expired status report according to the timing information; and a discarding module 403 configured to discard the received status report when it is determined that the received status report is a repeatedly-received status report or an expired status report.

The timing information represents a time at which the status report required to be sent is generated, or represents a serial number for the status report required to be sent.

When the timing information represents a serial number for the received status report, the determination module 402 comprises: an implementation module configured to determine whether or not the serial number of the received status report meets the following conditions: the serial number for the received status report is the same as the serial number for a previously received status report, or the serial number for the received status report is beyond a variable range of the serial number of the status report currently required to be received; a determination module configured to determine that the received status report is a repeatedly-received status report or an expired status report when the serial number of the received status report meets the above conditions; and an update module configured to, when the serial number of the received status report fails to meet the above conditions, update the variable range of the serial number of the status report currently required to be received according to the serial number of the received status report, and record the serial number for the received status report as the serial number for the previously received status report.

As shown in Fig. 5, the communication system provided in the present disclosure comprises: an RLC receiving terminal 501 receives a status report reply request from the RLC sending terminal, and generates, according to a data message received from the RLC sending terminal, a status report required to be sent, wherein the status report required to be sent comprises timing information of the status report required to be sent, and sends the status report required to be sent to the RLC sending terminal; and an RLC sending terminal 502 acquires the timing information comprised in the received status report, determines whether or not the received status report is a repeatedly-received status report or an expired status report according to the timing information, and discards the received status report when it is determined that the received status report is a repeatedly-received status report or an expired status report.

The above description is only preferred embodiments of the present disclosure. It should be appreciated, for those of ordinary skilled in the art, various modifications and improvements may be made to the present disclosure without departing from the scope of the present disclosure as defined solely by the appended claims.

## Claims

1. A method for processing a status report, comprising:
generating (S101), by a RLC receiving terminal, a status report required to be sent according to a data message received from an RLC sending terminal, the status report required to be sent comprises timing information of the status report required to be sent; and
sending (S102), by the RLC receiving terminal, the status report required to be sent to the RLC sending terminal, and determining, by the RLC sending terminal, whether or not the status report is a repeatedly-received status report or an expired status report according to the timing information comprised in the status report;
**characterized in that**: when the timing information represents a serial number for the status report required to be sent, filling, by the RLC receiving terminal, the serial number for the status report required to be sent into a CPT field of the status report required to be sent; or filling the serial number for the status report required to be sent into the CPT field and a D/C field of the status report required to be sent.

2. The method according to claim 1, wherein the step of generating the status report required to be sent comprises:
acquiring a serial number for a previously sent status report;
calculating the serial number for the status report required to be sent according to the serial number for the previously sent status report; and
generating the status report required to be sent according to the serial number for the status report required to be sent.

3. A method for processing a status report, which is applied to a Radio Link Control, RLC sending terminal, comprising:
acquiring (S201), by a RLC sending terminal, timing information comprised in a received status report;
determining (S202), by the RLC sending terminal, whether or not the received status report is a repeatedly-received status report or an expired status report according to the timing information; and
discarding (S203), by the RLC sending terminal, the received status report when it is determined that the received status report is a repeatedly-received status report or an expired status report;
**characterized in that**: when the timing information represents a serial number for the received status report, the step of acquiring, by a RLC sending terminal, timing information comprised in a received status report comprises:
acquiring the serial number carried in a CPT field of the received status report; or
acquiring the serial number carried in the CPT field and a D/C field of the received status report.

4. The method according to claim 3, wherein the step of determining, by the RLC sending terminal, whether or not the received status report is a repeatedly-received status report or an expired status report according to the timing information comprises:
determining whether or not the serial number of the received status report meets the following conditions: the serial number for the received status report is the same as the serial number for a previously received status report, or the serial number for the received status report is beyond a variable range of the serial number of the status report currently required to be received;
when the serial number of the received status report meets the above conditions, it is determined that the received status report is a repeatedly-received status report or an expired status report; and
when the serial number of the received status report fails to meet the above conditions, updating the variable range of the serial number of the status report currently required to be received according to the serial number of the received status report, and recording the serial number for the received status report as the serial number for the previously received status report.

5. A communication device serving as a Radio Link Control, RLC receiving terminal (501), comprising: a generation module (301) and a sending module (302), wherein
the generation module (301) is configured to generate a status report required to be sent according to a data message received from an RLC sending terminal, the status report required to be sent comprises timing information of the status report required to be sent; and
the sending module (302) is configured to send the status report required to be sent to the RLC sending terminal so that the RLC sending terminal determines whether or not the status report is a repeatedly-received status report or an expired status report according to the timing information comprised in the status report;
**characterized in that**: when the timing information represents a serial number for the received status report, the generation module (301) is configured to fill the serial number for the status report required to be sent into a CPT field of the status report required to be sent; or fill the serial number for the status report required to be sent into the CPT field and a D/C field of the status report required to be sent.

6. The communication device according to claim 5, wherein the timing information represents a serial number for the status report required to be sent, and the generation module (301) comprises:
an acquisition module configured to acquire a serial number for a previously sent status report;
a calculation module configured to calculate the serial number for the status report required to be sent according to the serial number for the previously sent status report; and
an implementation module configured to generate the status report required to be sent according to the serial number for the status report required to be sent.

7. A communication device serving as a Radio Link Control, RLC sending terminal (502), comprising: an acquisition module (401), a determination module (402) and a discarding module (403), wherein
the acquisition module (401) is configured to acquire timing information comprised in a received status report;
the determination module (402) is configured to determine whether or not the received status report is a repeatedly-received status report or an expired status report according to the timing information; and
the discarding module (403) is configured to discard the received status report when it is determined that the received status report is a repeatedly-received status report or an expired status report;
**characterized in that**: when the timing information represents a serial number for the received status report, the acquiring unit is configured to acquire the serial number carried in a CPT field of the received status report; or acquire the serial number carried in the CPT field and a D/C field of the received status report.

8. The communication device according to claim 7, wherein the timing information represents a serial number for the received status report, and the determination module comprises:
an implementation module configured to determine whether or not the serial number of the received status report meets the following conditions: the serial number for the received status report is the same as the serial number for a previously received status report, or the serial number for the received status report is beyond a variable range of the serial number of the status report currently required to be received;
a determination module configured to determine that the received status report is a repeatedly-received status report or an expired status report when the serial number of the received status report meets the above conditions; and
an update module configured to, when the serial number of the received status report fails to meet the above conditions, update the variable range of the serial number of the status report currently required to be received according to the serial number of the received status report, and record the serial number for the received status report as the serial number for the previously received status report.

9. A communication system, comprising: an RLC receiving terminal (501) according to claim 5 and an RLC sending terminal (502) according to claim 7.

## Patentansprüche

1. Verfahren zum Verarbeiten eines Statusberichts, umfassend:
Erzeugen (S101), durch ein RLC-Empfangsendgerät, eines Statusberichts, der gemäß einer Datennachricht, die von einem RLC-Sendeendgerät empfangen worden ist, gesendet werden soll, wobei der Statusbericht, der gesendet werden soll, Zeitsteuerungsinformationen des Statusberichts, der gesendet werden soll, umfasst; und
Senden (S102), durch das RLC-Empfangsendgerät, des Statusberichts, der gesendet werden soll, zu dem RLC-Sendeendgerät, und Bestimmen, durch das RLC-Sendeendgerät, ob der Statusbericht ein wiederholt empfangener Statusbericht oder ein abgelaufener Statusbericht ist, gemäß der Zeitsteuerungsinformationen, die in dem Statusbericht enthalten sind;
**dadurch gekennzeichnet, dass**: wenn die Zeitsteuerungsinformationen eine laufende Nummer für den Statusbericht, der gesendet werden soll, darstellen, Einbringen, durch das RLC-Empfangsendgerät, der laufenden Nummer für den Statusbericht, der gesendet werden soll, in ein CPT-Feld des Statusberichts, der gesendet werden soll; oder Einbeziehen der laufenden Nummer für den Statusbericht, der gesendet werden soll, in das CPT-Feld und ein D/C-Feld des Statusberichts, der gesendet werden soll.

2. Verfahren nach Anspruch 1, bei dem der Schritt des Erzeugens des Statusberichts, der gesendet werden soll, umfasst:
Erfassen einer laufenden Nummer für einen früher gesendeten Statusbericht;
Berechnen der laufenden Nummer für den Statusbericht, der gesendet werden soll, gemäß der laufenden Nummer für den früher gesendeten Statusbericht; und
Erzeugen des Statusberichts, der gesendet werden soll, gemäß der laufenden Nummer für den Statusbericht, der gesendet werden soll.

3. Verfahren zum Verarbeiten eines Statusberichts, der auf ein "Radio Link Control", RLC, -Sendeendgerät angewandt wird, umfassend:
Erfassen (S201), durch ein RLC-Sendeendgerät, von Zeitsteuerungsinformationen, die in einem empfangenen Statusbericht enthalten sind;
Bestimmen (S202), durch das RLC-Sendeendgerät, ob der empfangene Statusbericht ein wiederholt empfangener Statusbericht oder ein abgelaufener Statusbericht ist, gemäß der Zeitsteuerungsinformationen; und
Verwerfen (S203), durch das RLC-Sendeendgerät, des empfangenen Statusberichts, wenn festgestellt wird, dass der empfangene Statusbericht ein wiederholt empfangener Statusbericht oder ein abgelaufener Statusbericht ist;
**dadurch gekennzeichnet, dass**: wenn die Zeitsteuerungsinformationen eine laufende Nummer für den empfangenen Statusbericht darstellen, der Schritt des Erfassens, durch ein RLC-Sendeendgerät, von Zeitsteuerungsinformationen, die in einem empfangenen Statusbericht enthalten sind, umfasst:
Erfassen der laufenden Nummer, die in ein CPT-Feld des empfangenen Statusberichts eingebracht ist; oder
Erfassen der laufenden Nummer, die in das CPT-Feld und ein D/C-Feld des empfangenen Statusberichts eingebracht ist.

4. Verfahren nach Anspruch 3, bei dem der Schritt des Bestimmens, durch das RLC-Empfangsendgerät, ob der empfangene Statusbericht ein wiederholt empfangener Statusbericht oder ein abgelaufener Statusbericht ist oder nicht, gemäß der Zeitsteuerungsinformationen umfasst:
Bestimmen, ob die laufende Nummer des empfangenen Statusberichts die folgenden Bedingungen erfüllt oder nicht: die laufende Nummer für den empfangenen Statusbericht ist mit der laufenden Nummer für einen früher empfangenen Statusbericht identisch, oder die laufende Nummer für den empfangenen Statusbericht liegt außerhalb eines variablen Bereichs der laufenden Nummer des Statusberichts, der gegenwärtig empfangen werden soll;
wenn die laufende Nummer des empfangenen Statusberichts die vorstehenden Bedingungen erfüllt, wird festgestellt, dass der empfangene Statusbericht ein wiederholt empfangener Statusbericht oder ein abgelaufener Statusbericht ist; und
wenn die laufende Nummer des empfangenen Statusberichts die vorstehenden Bedingungen nicht erfüllt, Aktualisieren des variablen Bereichs der laufenden Nummer des Statusberichts, der gegenwärtig empfangen werden muss, gemäß der laufenden Nummer des empfangenen Statusberichts, und Aufzeichnen der laufenden Nummer für den empfangenen Statusbericht als die laufende Nummer für den früher empfangenen Statusbericht.

5. Kommunikationsvorrichtung, die als "Radio Link Control", RLC, -Empfangsendgerät (501) dient, umfassend: ein Erzeugungsmodul (301) und ein Sendemodul (302), wobei
das Erzeugungsmodul (301) zum Erzeugen eines Statusberichts ausgebildet ist, der gemäß einer Datennachricht, die von einem RLC-Sendeendgerät empfangen worden ist, gesendet werden soll, wobei der Statusbericht, der gesendet werden soll, Zeitsteuerungsinformationen des Statusberichts, der gesendet werden soll, umfasst; und
das Sendemodul (302) zum Senden des Statusberichts, der gesendet werden soll, zu dem RLC-Sendeendgerät, so dass das RLC-Sendeendgerät bestimmt, ob der Statusbericht ein wiederholt empfangener Statusbericht oder ein abgelaufener Statusbericht ist oder nicht, gemäß der Zeitsteuerungsinformationen, die in dem Statusbericht enthalten sind, ausgebildet ist;
**dadurch gekennzeichnet, dass**: wenn die Zeitsteuerungsinformationen eine laufende Nummer für den empfangenen Statusbericht darstellen, das Erzeugungsmodul (301) zum Einbringen der laufenden Nummer für den Statusbericht, der gesendet werden soll, in ein CPT-Feld des Statusberichts, der gesendet werden soll; oder zum Einbeziehen der laufenden Nummer für den Statusbericht, der gesendet werden soll, in das CPT-Feld und ein D/C-Feld des Statusberichts, der gesendet werden soll, ausgebildet ist.

6. Kommunikationsvorrichtung nach Anspruch 5, bei dem die Zeitsteuerungsinformationen eine laufende Nummer für den Statusbericht, der gesendet werden soll, darstellen und das Erzeugungsmodul (301) umfasst:
ein Erfassungsmodul, das zum Erfassen einer laufenden Nummer für einen früher gesendeten Statusbericht ausgebildet ist;
ein Berechnungsmodul, das zum Berechnen der laufenden Nummer für den Statusbericht, der gesendet werden soll, gemäß der laufenden Nummer für den früher gesendeten Statusbericht ausgebildet ist; und
ein Implementierungsmodul, das zum Erzeugen des Statusberichts, der gesendet werden soll, gemäß der laufenden Nummer für den Statusbericht, der gesendet werden soll, ausgebildet ist.

7. Kommunikationsvorrichtung, die als "Radio Link Control", RLC, -Sendeendgerät (502) dient, umfassend: ein Erfassungsmodul (401), ein Bestimmungsmodul (402) und ein Modul zum Verwerfen (403), wobei
das Erfassungsmodul (401) zum Erfassen von Zeitsteuerungsinformationen ausgebildet ist, die in einem empfangenen Statusbericht enthalten sind;
das Bestimmungsmodul (402) zum Bestimmen, ob der Statusbericht ein wiederholt empfangener Statusbericht oder ein abgelaufener Statusbericht ist oder nicht, gemäß der Zeitsteuerungsinformationen ausgebildet ist; und
das Modul zum Verwerfen (403) zum Verwerfen des empfangenen Statusberichts ausgebildet ist, wenn festgestellt wird, dass der empfangene Statusbericht ein wiederholt empfangener Statusbericht oder ein abgelaufener Statusbericht ist;
**dadurch gekennzeichnet, dass**: wenn die Zeitsteuerungsinformationen eine laufende Nummer für den empfangenen Statusbericht darstellen, die Erfassungseinheit zum Erfassen der laufenden Nummer, die in ein CPT-Feld des empfangenen Statusberichts eingebracht ist; oder zum Erfassen der laufenden Nummer, die in das CPT-Feld und ein D/C-Feld des empfangenen Statusberichts eingebracht ist, ausgebildet ist.

8. Kommunikationsvorrichtung nach Anspruch 7, bei der die Zeitsteuerungsinformationen eine laufende Nummer für den empfangenen Statusbericht darstellen und das Bestimmungsmodul umfasst:
ein Implementierungsmodul, das zum Bestimmen, ob die laufende Nummer des empfangenen Statusberichts die folgenden Bedingungen erfüllt oder nicht, ausgebildet ist: die laufende Nummer für den empfangenen Statusbericht ist dieselbe wie die laufende Nummer für einen früher empfangenen Statusbericht, oder die laufende Nummer für den empfangenen Statusbericht liegt außerhalb eines variablen Bereichs der laufenden Nummer des Statusberichts, der gegenwärtig empfangen werden soll;
ein Bestimmungsmodul, das zum Bestimmen, dass der empfangene Statusbericht ein wiederholt empfangener Statusbericht oder ein abgelaufener Statusbericht ist, wenn die laufende Nummer des empfangenen Statusberichts die vorstehenden Bedingungen erfüllt; und
ein Aktualisierungsmodul, das ausgebildet ist, wenn die laufende Nummer des empfangenen Statusberichts die vorstehenden Bedingungen nicht erfüllt, zum Aktualisieren des variablen Bereichs der laufenden Nummer des Statusberichts, der gegenwärtig empfangen werden soll, gemäß der laufenden Nummer des empfangenen Statusberichts, und Aufzeichnen der laufenden Nummer für den empfangenen Statusbericht als die laufende Nummer für den früher empfangenen Statusbericht.

9. Kommunikationssystem, umfassend: ein RLC-Empfangsendgerät (501) nach Anspruch 5 und ein RLC-Sendeendgerät (502) nach Anspruch 7.

## Revendications

1. Procédé de traitement d'un rapport d'état, comprenant :
générer (S101), par un terminal de réception de RLC, un rapport d'état devant être envoyé selon un message de données reçu en provenance d'un terminal d'envoi de RLC, le rapport d'état devant être envoyé comprend des informations de minutage du rapport d'état devant être envoyé ; et
envoyer (S102), par le terminal de réception de RLC, le rapport d'état devant être envoyé au terminal d'envoi de RLC, et le fait de déterminer, par le terminal d'envoi de RLC, si le rapport d'état est ou non un rapport d'état reçu de façon répétée ou un rapport d'état expiré selon les informations de minutage comprises dans le rapport d'état ;
**caractérisé en ce que** : lorsque les informations de minutage représentent un numéro de série pour le rapport d'état devant être envoyé, le remplissage, par le terminal de réception de RLC, du numéro de série pour le rapport d'état devant être envoyé dans un champ CPT du rapport d'état devant être envoyé ; ou le remplissage du numéro de série pour le rapport d'état devant être envoyé dans le champ CPT et un champ D/C du rapport d'état devant être envoyé.

2. Procédé selon la revendication 1, dans lequel l'étape de génération du rapport d'état devant être envoyé comprend :
acquérir un numéro de série pour un rapport d'état précédemment envoyé ;
calculer le numéro de série pour le rapport d'état devant être envoyé selon le numéro de série pour le rapport d'état précédemment envoyé ; et
générer le rapport d'état devant être envoyé selon le numéro de série pour le rapport d'état devant être envoyé.

3. Procédé de traitement d'un rapport d'état, qui est appliqué à un terminal d'envoi de contrôle de liaison radio, RLC, comprenant :
acquérir (S201), par un terminal d'envoi de RLC, des informations de minutage comprises dans un rapport d'état reçu ;
déterminer (S202), par le terminal d'envoi de RLC, si le rapport d'état reçu est ou non un rapport d'état reçu de façon répétée ou un rapport d'état expiré selon les informations de minutage ; et
rejeter (S203), par le terminal d'envoi de RLC, le rapport d'état reçu lorsqu'on détermine que le rapport d'état reçu est un rapport d'état reçu de façon répétée ou un rapport d'état expiré ;
**caractérisé en ce que** : lorsque les informations de minutage représentent un numéro de série pour le rapport d'état reçu, l'étape d'acquisition, par un terminal d'envoi de RLC, d'informations de minutage comprises dans un rapport d'état reçu comprend :
acquérir le numéro de série acheminé dans un champ CPT du rapport d'état reçu; ou
acquérir le numéro de série acheminé dans le champ CPT et un champ D/C du rapport d'état reçu.

4. Procédé selon la revendication 3, dans lequel l'étape permettant de déterminer, par le terminal d'envoi de RLC, si le rapport d'état reçu est ou non un rapport d'état reçu de façon répétée ou un rapport d'état expiré selon les informations de minutage comprend :
le déterminer si le numéro de série du rapport d'état reçu satisfait ou non les conditions suivantes : le numéro de série pour le rapport d'état reçu est le même que le numéro de série pour un rapport d'état précédemment reçu, ou le numéro de série pour le rapport d'état reçu est au-delà d'une plage variable du numéro de série du rapport d'état devant actuellement être reçu ;
lorsque le numéro de série du rapport d'état reçu satisfait les conditions ci-dessus, on détermine que le rapport d'état reçu est un rapport d'état reçu de façon répétée ou un rapport d'état expiré ; et
lorsque le numéro de série du rapport d'état reçu ne réussit pas à satisfaire les conditions ci-dessus, la mise à jour de la plage variable du numéro de série du rapport d'état devant actuellement être reçu selon le numéro de série du rapport d'état reçu, et l'enregistrement du numéro de série pour le rapport d'état reçu en tant que numéro de série pour le rapport d'état précédemment reçu.

5. Dispositif de communication servant de terminal de réception de contrôle de liaison radio, RLC (501), comprenant : un module de génération (301) et un module d'envoi (302), dans lequel
le module de génération (301) est configuré pour générer un rapport d'état devant être envoyé selon un message de données reçu en provenance d'un terminal d'envoi de RLC, le rapport d'état devant être envoyé comprend des informations de minutage du rapport d'état devant être envoyé ; et
le module d'envoi (302) est configuré pour envoyer le rapport d'état devant être envoyé au terminal d'envoi de RLC de sorte que le terminal d'envoi de RLC détermine si le rapport d'état est ou non un rapport d'état reçu de façon répétée ou un rapport d'état expiré selon les informations de minutage comprises dans le rapport d'état ;
**caractérisé en ce que** : lorsque les informations de minutage représentent un numéro de série pour le rapport d'état reçu, le module de génération (301) est configuré pour remplir le numéro de série pour le rapport d'état devant être envoyé dans un champ CPT du rapport d'état devant être envoyé ; ou remplir le numéro de série pour le rapport d'état devant être envoyé dans le champ CPT et un champ D/C du rapport d'état devant être envoyé.

6. Dispositif de communication selon la revendication 5, dans lequel les informations de minutage représentent un numéro de série pour le rapport d'état devant être envoyé, et le module de génération (301) comprend :
un module d'acquisition configuré pour acquérir un numéro de série pour un rapport d'état précédemment envoyé ;
un module de calcul configuré pour calculer le numéro de série pour le rapport d'état devant être envoyé selon le numéro de série pour le rapport d'état précédemment envoyé ; et
un module d'implémentation configuré pour générer le rapport d'état devant être envoyé selon le numéro de série pour le rapport d'état devant être envoyé.

7. Dispositif de communication servant de terminal d'envoi de contrôle de liaison radio, RLC (502), comprenant : un module d'acquisition (401), un module de détermination (402) et un module de rejet (403), dans lequel
le module d'acquisition (401) est configuré pour acquérir des informations de minutage comprises dans un rapport d'état reçu ;
le module de détermination (402) est configuré pour déterminer si le rapport d'état reçu est ou non un rapport d'état reçu de façon répétée ou un rapport d'état expiré selon les informations de minutage ; et
le module de rejet (403) est configuré pour rejeter le rapport d'état reçu lorsqu'on détermine que le rapport d'état reçu est un rapport d'état reçu de façon répétée ou un rapport d'état expiré ;
**caractérisé en ce que** : lorsque les informations de minutage représentent un numéro de série pour le rapport d'état reçu, l'unité d'acquisition est configurée pour acquérir le numéro de série acheminé dans un champ CPT du rapport d'état reçu ; ou acquérir le numéro de série acheminé dans le champ CPT et un champ D/C du rapport d'état reçu.

8. Dispositif de communication selon la revendication 7, dans lequel les informations de minutage représentent un numéro de série pour le rapport d'état reçu, et le module de détermination comprend :
un module d'implémentation configuré pour déterminer si le numéro de série du rapport d'état reçu satisfait ou non les conditions suivantes : le numéro de série pour le rapport d'état reçu est le même que le numéro de série pour un rapport d'état précédemment reçu, ou le numéro de série pour le rapport d'état reçu est au-delà d'une plage variable du numéro de série du rapport d'état devant actuellement être reçu;
un module de détermination configuré pour déterminer que le rapport d'état reçu est un rapport d'état reçu de façon répétée ou un rapport d'état expiré lorsque le numéro de série du rapport d'état reçu satisfait les conditions ci-dessus ; et
un module de mise à jour configuré pour, lorsque le numéro de série du rapport d'état reçu ne réussit pas à satisfaire les conditions ci-dessus, mettre à jour la plage variable du numéro de série du rapport d'état devant actuellement être reçu selon le numéro de série du rapport d'état reçu, et enregistrer le numéro de série pour le rapport d'état reçu en tant que numéro de série pour le rapport d'état précédemment reçu.

9. Système de communication, comprenant : un terminal de réception de RLC (501) selon la revendication 5 et un terminal d'envoi de RLC (502) selon la revendication 7.
